# EUROPÄISCHE PATENTSCHRIFT

(11) **EP 4 157 943 B1**
(45) Veröffentlichungstag und Bekanntmachung des Hinweises auf die Patenterteilung: **31.01.2024**
(21) Anmeldenummer: 20728754.1
(22) Anmeldetag: 27.05.2020
(51) Int. Cl.: C08L 83/04

(54) **VERNETZBARE MASSEN AUF DER BASIS VON ORGANOSILICIUMVERBINDUNGEN**
CROSS-LINKABLE MASSES BASED ON ORGANOSILICON COMPOUNDS
MASSES RÉTICULABLES À BASE DE COMPOSÉS D'ORGANOSILICIUM

(43) Veröffentlichungstag der Anmeldung: 05.04.2023
(73) Patentinhaber: Wacker Chemie AG, 81737 München (DE)
(72) Erfinder: SCHÖLEY, Peter, 01665 Diera-Zehren OT Kleinzadel (DE); SCHEIM, Uwe, 01640 Coswig (DE)
(74) Vertreter: Fritz, Helmut
(86) Internationale Anmeldenummer: PCT/EP2020/064723
(87) Internationale Veröffentlichungsnummer: WO 2021/239222

(56) Entgegenhaltungen:
- EP-A1- 1 431 330
- EP-A1- 2 789 656
- DE-A1-102007 037 196
- DE-A1-102012 208 864

## Beschreibung

Die Erfindung betrifft durch Kondensationsreaktion vernetzbare Massen auf der Basis von Organosiliciumverbindungen, Verfahren zu deren Herstellung und deren Verwendung sowie ein Verfahren zur Herstellung von Organyloxygruppen aufweisenden Organosiliciumverbindungen.

Unter Ausschluss von Wasser lagerfähige, bei Zutritt von Wasser bei Raumtemperatur unter Abspaltung von Alkoholen zu Elastomeren aushärtende Einkomponenten-Dichtmassen, sind bereits bekannt. Diese Produkte werden in großen Mengen z.B. in der Bauindustrie eingesetzt. Die Basis dieser Mischungen sind oft Organopolysiloxane, die reaktive Substituenten, wie OH-Gruppen oder hydrolysierbare Gruppen, wie z.B. Alkoxygruppen, tragen. Des Weiteren können diese Dichtmassen Füllstoffe, Weichmacher, Vernetzer, Katalysatoren sowie verschiedene Additive enthalten.

Bei Massen, die durch Abspaltung von Alkohol aushärten, besteht ein wichtiger Schritt in der sogenannten Endcappingreaktion. Dieser Begriff beschreibt die Umsetzung von endständigen OH-Gruppen, insbesondere linearer Organopolysiloxane mit Alkoxysilanen. Üblicherweise erfolgt diese Umsetzung wegen ihres langsamen Ablaufes in einem vorgelagerten Schritt vor der Herstellung der Dichtmasse. Zur Optimierung der Reaktion sind verschiedene Katalysatoren vorgeschlagen worden. In EP-B 1964872 wird zum Beispiel die Verwendung von Zinkchelaten bzw. die Verwendung von Guanidinen oder Lithiumverbindungen beschrieben.

Üblicherweise müssen solche Katalysatoren jedoch wegen der Verringerung der Lagerstabilität oder wegen ihrer Vergilbungsneigung aus der Reaktionsmischung entfernt oder zumindest neutralisiert werden. Dies erfordert nachteilig einen zusätzlichen Verfahrensschritt, der insbesondere wegen der hohen Polymerviskositäten technisch sehr aufwendig ist. EP-B 2176351 beschreibt ein Alkoxysystem, bei dem das Endcapping ohne zusätzliche Katalysatoren durchgeführt werden kann. Die Reaktivität des verwendeten Silans, das eine in alpha-Stellung substituierte Alkylgruppe aufweist, ist ausreichend hoch, um das Endcapping innerhalb weniger Minuten zu beenden.

Es hat sich jedoch herausgestellt, dass es bei diesen Reaktionen zu einem sehr starken Anstieg der Mischungsviskosität kommt. Dies ist unerwünscht, weil solche hohen Viskositäten technisch nur sehr aufwendig gehandhabt werden können. Außerdem ist es nachteilig, dass nachfolgende Verarbeitungsschritte, wie das Fördern mit Pumpen oder das Einarbeiten von Füllstoffen, zu unerwünscht starken Temperaturerhöhungen führen. Dies würde die Lagerstabilität der hergestellten RTV1-Dichtmasse verringern, ggf. zusätzlich zu notwendigen Abkühlprozessen führen und auch die Sicherheit der Produktionsanlagen wegen der üblicherweise niedrigen Flammpunkte der verschiedenen Mischungsbestandteile gefährden.

DE 102007037196 A1, EP 1431330 A1 und EP 2789656 A1 offenbaren jeweils Organopolysiloxanzusammensetzungen auf Basis von Dihydroxy-Dimethylpolysiloxanen und aminofunktionellen Silanen.

Es bestand daher die Aufgabe die Nachteile des Standes der Technik zu überwinden.

Gegenstand der Erfindung sind durch Kondensationsreaktion vernetzbare Massen, herstellbar durch Vermischen von
**(A) Organosiliciumverbindungen** mit mindestens zwei Silanolgruppen mit einer Viskosität von 10³ bis 10⁶ mPas bei 25°C,
   und
**(M) Mischungen** enthaltend
(B) Organosiliciumverbindungen der Formel

   R⁶R⁷N-CR¹₂SiRₐ(OR²)₃₋ₐ (I),

   wobei
   R gleiche oder verschiedene, einwertige Kohlenwasserstoffreste bedeutet,
   R¹ gleiche oder verschiedene, einwertige Kohlenwasserstoffreste oder Wasserstoffatom bedeutet,
   R² gleich oder verschieden sein kann und einwertige, gegebenenfalls substituierte Kohlenwasserstoffreste bedeutet,
   R⁶ gleich oder verschieden sein kann und einwertige, gegebenenfalls substituierte Kohlenwasserstoffreste oder Wasserstoffatom bedeutet,
   R⁷ gleich oder verschieden sein kann und einwertige, gegebenenfalls substituierte Kohlenwasserstoffreste bedeutet, wobei R⁶ und R⁷ auch einen Ring bilden können, der gegebenenfalls durch Heteroatome unterbrochen sein kann, und
   a gleich 0 oder 1, bevorzugt 0, ist,
   und/oder deren Teilhydrolysate,
Komponente (C), ausgewählt aus
(C2) Verbindungen der Formel

   R⁵OH (III),

   wobei
   R⁵ gleich oder verschieden sein kann und einwertige, gegebenenfalls substituierte Kohlenwasserstoffreste bedeutet,
   sowie gegebenenfalls (C1) Organosiliciumverbindungen der Formel R³_{4-b}Si(OR⁴)_{b} (II) , wobei R³ gleich oder verschieden sein kann und einwertige, SiC-gebundene, gegebenenfalls substituierte Kohlenwasserstoffreste, die durch Sauerstoffatome unterbrochen sein können, ausgenommen R⁶R⁷N-CR¹₂-Reste, bedeutet, R⁴ gleich oder verschieden sein kann und einwertige Kohlenwasserstoffreste, die gegebenenfalls durch Sauerstoffatome unterbrochen sein können, bedeutet und b 2, 3 oder 4, bevorzugt 3 oder 4, ist, und gegebenenfalls (D) Katalysator.

Bei den Teilhydrolysaten der Verbindungen der Formel (I) kann es sich um Teilhomohydrolysate handeln wie auch um Teilcohydrolysate. Falls es sich bei der erfindungsgemäß eingesetzten Komponente (B) um Teilhydrolysate der Verbindungen der Formel (I) handelt, sind solche mit bis zu 10 Siliciumatomen bevorzugt.

Bevorzugt handelt es sich bei Rest R um gegebenenfalls substituierte, einwertige Kohlenwasserstoffreste mit 1 bis 18 Kohlenstoffatomen, besonders bevorzugt um Alkylreste, den Vinyl-, den 3,3,3-Trifluorprop-1-yl- oder den Phenylrest, insbesondere um den Methylrest.

Beispiele für Reste R sind Alkylreste, wie der Methyl-, Ethyl-, n-Propyl, iso-Propyl-, 1-n-Butyl-, 2-n-Butyl-, iso-Butyl-, tert.-Butyl-, n-Pentyl-, iso-Pentyl-, neo-Pentyl-, tert.-Pentylrest; Hexylreste, wie der n-Hexylrest; Heptylreste, wie der n-Heptylrest; Octylreste, wie der n-Octylrest und iso-Octylreste, wie der 2,2,4-Trimethylpentylrest; Nonylreste, wie der n-Nonylrest; Decylreste, wie der n-Decylrest; Dodecylreste, wie der n-Dodecylrest; Octadecylreste, wie der n-Octadecylrest; Cycloalkylreste, wie der Cyclopentyl-, Cyclohexyl-, Cycloheptylrest und Methylcyclohexylreste; Alkenylreste, wie der Vinyl-, 1-Propenyl- und der 2-Propenylrest; Arylreste, wie der Phenyl-, Naphthyl-, Anthryl- und Phenanthrylrest; Alkarylreste, wie o-, m-, p-Tolylreste; Xylylreste und Ethylphenylreste; und Aralkylreste, wie der Benzylrest, der α- und der β-Phenylethylrest.

Beispiele für Reste R¹ sind Wasserstoffatom sowie die für R angegebenen Reste.

Bevorzugt handelt es sich bei Rest R¹ um Wasserstoffatom und Kohlenwasserstoffreste mit 1 bis 20 Kohlenstoffatomen, insbesondere um Wasserstoffatom.

Beispiele für Reste R², R⁴ und R⁵ sind unabhängig voneinander die für R angegebenen Reste.

Bevorzugt handelt es sich bei den Resten R², R⁴ und R⁵ unabhängig voneinander um Alkylreste mit 1 bis 8 Kohlenstoffatomen, besonders bevorzugt um den Methyl-, Ethyl-, n-Propyl- oder isoPropylrest, insbesondere um den Methyl- oder Ethylrest, ganz besonders bevorzugt um den Ethylrest.

Bevorzugt haben die Reste R², R⁴ und R⁵ in der erfindungsgemäß eingesetzten Mischung (M) die gleiche Bedeutung.

Beispiele für Reste R⁶ sind Wasserstoffatom sowie die für R angegebenen Reste.

Bevorzugt handelt es sich bei Rest R⁶ um Wasserstoffatom oder lineare, verzweigte oder cyclische Kohlenwasserstoffreste mit 1 bis 6 Kohlenstoffatomen, insbesondere um den Methyl-, Ethyl-, n-Butyl-, cyclo-Hexyl- oder Phenylrest.

Beispiele für Reste R⁷ sind die für R angegebenen Reste.

Bevorzugt handelt es sich bei Rest R⁷ um Wasserstoffatom oder lineare, verzweigte oder cyclische Kohlenwasserstoffreste mit 1 bis 6 Kohlenstoffatomen, besonders bevorzugt um Wasserstoffatom, den Methyl-, Ethyl- oder n-Butylrest.

Reste R⁶ und R⁷ können zusammen mit dem Stickstoffatom, an das sie angebunden sind, einen Ring bilden, was z.B. 1,4-Tetrahydrooxazin- oder Piperazinstrukturen ergeben kann.

Beispiele für erfindungsgemäß eingesetzte Verbindungen (B) sind Aminomethyltriethoxysilan, N-Methylaminomethyltriethoxysilan, N-Ethylaminomethyltriethoxysilan, N-n-Propylaminomethyltriethoxysilan, N-n-Butylaminomethyltriethoxysilan, N-cyclo-Hexylaminomethyltriethoxysilan, N-Phenylaminomethyltriethoxysilan, N,N-Dimethylaminomethyltriethoxysilan, N,N-Diethylaminomethyltriethoxysilan, N,N-Di-n-propylaminomethyltriethoxysilan, N,N-Di-n-butylaminomethyltriethoxysilan, Aminomethyltrimethoxysilan, N-Methylaminomethyltrimethoxysilan, N-Ethylaminomethyltrimethoxysilan, N-n-Propylaminomethyltrimethoxysilan, N-n-Butylaminomethyltrimethoxysilan, N-cyclo-Hexylaminomethyltrimethoxysilan, N-Phenylaminomethyltrimethoxysilan, N,N-Dimethylaminomethyltrimethoxysilan, N,N-Diethylaminomethyltrimethoxysilan, N,N-Di-n-propylaminomethyltrimethoxysilan, N,N-Di-n-butylaminomethyltrimethoxysilan, 4-(Triethoxysilylmethyl)tetrahydro-1,4-oxazin und 4-(Trimethoxysilylmethyl)tetrahydro-1,4-oxazin, wobei N-cyclo-Hexylaminomethyltriethoxysilan, N-Phenylaminomethyltriethoxysilan, N,N-Di-n- butylaminomethyltriethoxysilan, 4-(Triethoxysilylmethyl)tetrahydro-1,4-oxazin oder 4-(Trimethoxysilylmethyl)tetrahydro-1,4-oxazin bevorzugt und N,N-Di-n-butylaminomethyltriethoxysilan oder 4-(Triethoxysilylmethyl)-tetrahydro-1,4-oxazin besonders bevorzugt sind.

Die erfindungsgemäß eingesetzten Verbindungen (B) sind handelsübliche Verbindungen bzw. nach in der Chemie gängigen Verfahren herstellbar.

Beispiele für Reste R³ sind die für R angegebenen Reste sowie mit Aminogruppen subsituierte Reste, wie H₂N(CH₂)₃-, H₂N(CH₂)₂NH(CH₂)₂-, H₂N(CH₂)₂NH(CH₂)₂NH(CH₂)₃-, H₃CNH(CH₂)₃-,

C₂H₅NH(CH₂)₃-, H₂N(CH₂)₄-, H₂N(CH₂)₅-, H(NHCH₂CH₂)₃-, cyclo-C₆H₁₁NH(CH₂)₃-, (CH₃)₂N(CH₂)₃- und (C₂H₅)₂N (CH₂)₃-Reste.

Bevorzugt handelt es sich bei Rest R³ um den Methyl-, n-Butyl-, 2,2,4-Trimethylpentyl-, n-Hexadecyl-, Vinyl- oder Phenylrest oder H₂N(CH₂)₃-, H₂N(CH₂)₂NH(CH₂)₂- oder cyclo-C₆H₁₁NH(CH₂)₃-Reste.

Beispiele für gegebenenfalls eingesetzte Verbindungen (C1) sind Methyltrimethoxysilan, Ethyltrimethoxysilan, n-Propyltrimethoxysilan, n-Butyltrimethoxysilan, n-Hexadecyltrimethoxysilan, Vinyltrimethoxysilan, Phenyltrimethoxysilan, Methyltriethoxysilan, Ethyltriethoxysilan, n-Propyltriethoxysilan, n-Butyltriethoxysilan, n-Hexadecyltriethoxysilan, Vinyltriethoxysilan, Phenyltriethoxysilan, Tetraethoxysilan, 3-Aminopropyltrimethoxysilan, N-(2-Aminoethyl)-3-aminopropyltrimethoxysilan, N-Cyclohexyl-3-aminopropyltrimethoxysilan, 3-Aminopropyltriethoxysilan und N-(2-Aminoethyl)-3-aminopropyltriethoxysilan und N-Cyclohexyl-3-aminopropyltriethoxysilan, wobei Methyltrimethoxysilan, n-Hexadecyltrimethoxysilan, Vinyltrimethoxysilan, Phenyltrimethoxysilan, Methyltriethoxysilan, n-Hexadecyltriethoxysilan, Vinyltriethoxysilan, Phenyltriethoxysilan, Tetraethoxysilan, 3-Aminopropyltrimethoxysilan, N-(2-Aminoethyl)-3-aminopropyltrimethoxysilan, N-Cyclohexyl-3-aminopropyltrimethoxysilan, 3-Aminopropyltriethoxysilan, N-(2-Aminoethyl)-3-aminopropyltriethoxysilan oder N-Cyclohexyl-3-aminopropyltriethoxysilan bevorzugt und Methyltriethoxysilan, Vinyltriethoxysilan, Phenyltriethoxysilan, Tetraethoxysilan, 3-Aminopropyltriethoxysilan, N-(2-Aminoethyl)-3-aminopropyltriethoxysilan oder N-Cyclohexyl-3-aminopropyltriethoxysilan besonders bevorzugt sind.

Die gegebenenfalls eingesetzten Verbindungen (C1) sind handelsübliche Verbindungen bzw. nach in der Chemie gängigen Verfahren herstellbar.

Beispiele für erfindungsgemäß eingesetzte Verbindungen (C2) sind Methanol, Ethanol, n-Propanol, Isopropanol, n-Butanol, Isobutylalkohol, Sec-Butylalkohol, Amylalkohole, wie Pentan-1-ol, Pentan-2-ol, Pentan-3-ol, tert-Pentanol 3-Methylbutan-1-ol, 3-Methylbutan-2-ol, 2,2-Dimethyl-1-propanol, n-Hexanol und n-Octanol, wobei Methanol oder Ethanol bevorzugt sind und Ethanol besonders bevorzugt ist.

Die erfindungsgemäß eingesetzten Verbindungen (C2) sind handelsübliche Verbindungen bzw. nach in der Chemie gängigen Verfahren herstellbar.

Die erfindungsgemäß eingesetzten Mischungen (M) enthalten Komponente (C) in Mengen von vorzugsweise 0,01 bis 20 Gewichtsteilen, besonders bevorzugt 0,05 bis 5 Gewichtsteilen, insbesondere 0,1 bis 1 Gewichtsteilen, jeweils bezogen auf 100 Gewichtsteile Komponente (B).

Bei der erfindungsgemäß eingesetzten Komponente (C) kann es sich ausschließlich um Verbindungen (C2) handeln oder um Mischungen aus

Verbindungen (C1) und (C2).

Falls es sich bei der erfindungsgemäß eingesetzten Komponente (C) um Mischungen aus Verbindungen (C1) und (C2) handelt, werden diese im Gewichtsverhältnis (C1) zu (C2) von bevorzugt 0,01 zu 1 bis 1000 zu 1 eingesetzt.

Bevorzugt handelt es sich bei der erfindungsgemäß eingesetzten Komponente (C) um ausschließlich Verbindungen (C2).

In einer weiteren bevorzugten Ausführungsform handelt es sich bei der erfindungsgemäß eingesetzten Komponente (C) um Mischungen aus Organosiliciumverbindungen (C1) und Verbindungen (C2) im Gewichtsverhältnis (C1) zu (C2) von 100 zu 1 bis 1000 zu 1. Bei dem gegebenenfalls in den erfindungsgemäß eingesetzten Mischungen (M) enthaltenen Katalysator (D) kann es sich um beliebige und bekannte Katalysatoren handeln, die auch bisher bei sogenannten Endcappingreaktionen eingesetzt wurden. Bevorzugte Beispiele für Katalysatoren (D) sind Zinkacetylacetonat, Lithiumethylat, Lithiummethylat, n-Butyllithium, N,N-Di-n-Butylammoniumformiat, N,N-Di-n-Butylammoniumacetat, N,N,N',N'-Tetramethylguanidin oder 1,5,7-Triazabicyclo[4.4.0]-dec-5-en, wobei es sich besonders bevorzugt um 1,5,7-Triazabicyclo[4.4.0]dec-5-en handelt.

Falls die erfindungsgemäß eingesetzten Mischungen (M) Katalysator (D) enthalten, handelt es sich um Mengen von vorzugsweise 0,001 bis 1 Gewichtsteilen, bevorzugt 0,005 bis 0,1 Gewichtsteilen, jeweils bezogen auf 100 Gewichtsteile der Mischung (M). Die Mischungen (M) enthalten bevorzugt keine Katalysatoren (D).

Bei den einzelnen Bestandteilen der erfindungsgemäß eingesetzten Mischung (M) kann es sich jeweils um eine Art eines solchen Bestandteils wie auch um ein Gemisch aus mindestens zwei verschiedenen Arten derartiger Bestandteile handeln.

Vorzugsweise bestehen die erfindungsgemäß eingesetzten Mischungen (M) im Wesentlichen aus den Komponenten (B), (C) und gegebenenfalls (D), besonders bevorzugt bestehen sie zu mindestens 95 Gew.-% aus den Komponenten (B), (C) und gegebenenfalls (D). Insbesondere enthalten die erfindungsgemäß eingesetzten Mischungen (M) zusätzlich zu den Komponenten (B), (C) und gegebenenfalls (D) keine weiteren Bestandteile.

Zur Bereitung der erfindungsgemäß eingesetzten Mischungen (M) können alle Bestandteile in beliebiger Reihenfolge miteinander vermischt werden. Dieses Vermischen findet bevorzugt bei Raumtemperatur und dem Druck der umgebenden Atmosphäre, also etwa 900 bis 1100 hPa sowie unter weitestgehendem Ausschluss von Wasser aus der umgebenden Atmosphäre statt.

Die erfindungsgemäßen Massen enthalten Mischungen (M) in Mengen von vorzugsweise 1 bis 10 Gewichtsteilen, besonders bevorzugt 1 bis 5 Gewichtsteilen, insbesondere 1,5 bis 3,5 Gewichtsteilen, jeweils bezogen auf 100 Gewichtsteile Komponente (A).

Bei den erfindungsgemäß eingesetzten Organosiliciumverbindungen (A) kann es sich um alle Organosiliciumverbindungen mit mindestens zwei OH-Gruppen handeln, die auch bisher in durch Kondensationsreaktion vernetzbaren Massen eingesetzt worden sind. Bevorzugt handelt es sich bei den erfindungsgemäß eingesetzten Organosiliciumverbindungen (A) um solche enthaltend Einheiten der Formel

R⁸_{d}(OH)ₑSiO_{(4-d-e)/2} (IV),

wobei
R⁸ gleich oder verschieden sein kann und gegebenenfalls substituierte Kohlenwasserstoffreste, die durch Sauerstoffatome unterbrochen sein können, bedeutet,
d 0, 1, 2 oder 3, bevorzugt 2, ist und
e 0, 1, 2 oder 3, bevorzugt 0 oder 1, ist,
mit der Maßgabe, dass die Summe aus d+e≤3 ist und pro Molekül mindestens zwei OH-Reste anwesend sind.

Beispiele für Rest R⁸ sind die für Rest R angegebenen Beispiele.

Bevorzugt handelt es sich bei Rest R⁸ um einwertige Kohlenwasserstoffreste mit 1 bis 18 Kohlenstoffatomen, die gegebenenfalls mit Halogenatomen, Aminogruppen, Ethergruppen, Estergruppen, Epoxygruppen, Mercaptogruppen, Cyanogruppen oder (Poly)-glykolresten substituiert sind, wobei letztere aus Oxyethylen- und/oder Oxypropyleneinheiten aufgebaut sind, besonders bevorzugt um Alkylreste mit 1 bis 12 Kohlenstoffatomen, insbesondere um den Methylrest.

Besonders bevorzugt handelt es sich bei erfindungsgemäß eingesetzten Organosiliciumverbindungen (A) um im Wesentlichen lineare, OH-terminierte Organopolysiloxane, insbesondere um α,ω-Dihydroxydialkylpolysiloxane.

Bevorzugte Beispiele für Organosiliciumverbindungen (A) sind (HO)Me₂SiO[SiMe₂O]₃₀₋₂₀₀₀SiMe₂(OH) mit Me gleich Methylrest.

Bei den Organosiliciumverbindungen (A) handelt es sich um handelsübliche Produkte bzw. sind nach in der Siliciumchemie gängigen Methoden herstellbar.

Erfindungsgemäß eingesetzte Organosiliciumverbindungen (A) haben eine Viskosität von vorzugsweise 1000 bis 500 000 mPas, besonders bevorzugt 1 000 bis 350 000 und insbesondere 5 000 bis 150 000 mPas bei 25°C.

Im Rahmen der vorliegenden Erfindung wird die dynamische Viskosität der Organosiliciumverbindungen bevorzugt nach DIN 53019 gemessen. Dabei wird vorzugsweise wie folgt vorgegangen: Die Viskosität wird, sofern nicht anders angegeben, bei 25°C mittels eines Rotationsrheometers "Physica MCR 300" von der Firma Anton Paar gemessen. Dabei wird für Viskositäten von 1 bis 200 mPa·s ein koaxiales Zylinder-Messsystem (CC 27) mit einem Ring-Messspalt von 1,13 mm genutzt und für Viskositäten von größer als 200 mPa·s ein Kegel-Platte-Messsystem (Searle-System mit Messkegel CP 50-1) verwendet. Die Schergeschwindigkeit wird der Polymerviskosität angepasst (1 bis 99 mPa·s bei 100 s⁻¹; 100 bis 999 mPa·s bei 200 s⁻¹; 1000 bis 2999 mPa·s bei 120 s⁻¹; 3000 bis 4999 mPa·s bei 80 s⁻¹; 5000 bis 9999 mPa·s bei 62 s⁻¹; 10000 bis 12499 mPa·s bei 50 s⁻¹; 12500 bis 15999 mPa·s bei 38,5 s⁻¹; 16000 bis 19999 mPa·s bei 33 s⁻¹; 20000 bis 24999 mPa·s bei 25 s⁻¹; 25000 bis 29999 mPa·s bei 20 s⁻¹; 30000 bis 39999 mPa·s bei 17 s⁻¹; 40000 bis 59999 mPa·s bei 10 s⁻¹; 60000 bis 149999 bei 5 s⁻¹; 150000 bis 199999 mPa·s bei 3,3 s⁻¹; 200000 bis 299999 mPa·s bei 2,5 s⁻¹; 300000 bis 1000000 mPa·s bei 1,5 s⁻¹.

Das Vermischen der Komponente (A) mit der Mischung (M) kann bei Temperaturen bevorzugt zwischen 5°C und 35°C und einem Druck bevorzugt zwischen 0,1 bar und 300 bar erfolgen. Falls erwünscht, kann dieses Vermischen aber auch bei höheren Temperaturen erfolgen, z.B. bei Temperaturen im Bereich von 35 bis 135°C. Falls gewünscht kann geheizt oder gekühlt werden.

Das erfindungsgemäße Vermischen der Komponente (A) mit der Mischung (M) findet bevorzugt unter weitestgehendem Ausschluss von Wasser aus der umgebenden Atmosphäre statt. Dies kann z.B. in totraumfreien Anlagen geschehen. Wenn die Vermischung z.B. in offenen, diskontinuierlich arbeitenden Mischern erfolgt, sollte weitestgehender Ausschluss von Luftfeuchtigkeit gewährleistet werden, beispielsweise durch Überschleierung mit trockener Luft oder trockenem Stickstoff.

Beim Vermischen der Organosiliciumverbindungen (A) mit der Mischung (M) findet eine Reaktion der OH-Gruppen in der Verbindung (A) mit Silanen (B) statt. Dabei bilden sich Silylgruppen mit hydrolysierbaren Gruppen am Polymer, die dazu führen, dass bei Zutritt von Feuchtigkeit vernetzte Polymerstrukturen entstehen können. Die Reaktionszeiten liegen bei den oben beschriebenen Bedingungen bezüglich Temperatur und Druck bevorzugt zwischen 1 min und 30 min.

Das erfindungsgemäße Vermischen kann mit Hilfe beliebiger Mischaggregate erfolgen, so zum Beispiel mit statischen oder dynamischen Mischern, wobei dynamische Mischer bevorzugt sind.

Bevorzugt wird das erfindungsgemäße Vermischen mit kontinuierlich arbeitenden Mischaggregaten durchgeführt.

Gegenstand der Erfindung ist ein Verfahren zur Herstellung von Organyloxygruppen aufweisenden Organosiliciumverbindungen, dadurch gekennzeichnet, dass
(A) Organosiliciumverbindungen mit mindestens zwei Silanolgruppen mit einer Viskosität von 10³ bis 10⁶ mPas bei 25°C und
(M) Mischungen enthaltend (B) Organosiliciumverbindungen der Formel (I) und/oder deren Teilhydrolysate, Komponente (C), ausgewählt aus
(C2) Verbindungen der Formel (III), sowie gegebenenfalls (C2) Organosiliciumverbindungen der Formel (II), und gegebenenfalls (D) Katalysator
miteinander vermischt und reagieren gelassen werden.

Das erfindungsgemäße Verfahren zur Herstellung von Organyloxygruppen aufweisenden Organosiliciumverbindungen hat den Vorteil, dass die Viskosität des Reaktionsgemischs nach Abschluss der Reaktion überraschenderweise nur sehr moderat ansteigt.

Weiterhin war es überraschend, dass trotz Anwesenheit von Aminogruppen aufweisenden Verbindungen (B) keine Vergilbung auftritt.

Zusätzlich zu den Organosiliciumverbindungen (A) sowie den Mischungen (M) können zur Herstellung der erfindungsgemäßen Massen nun alle Stoffe eingesetzt werden, die auch bisher in durch Kondensationsreaktion vernetzbaren Massen eingesetzt worden sind, wie z.B. Vernetzungskatalysatoren (E), Füllstoffe (F), Haftvermittler (G), Weichmacher (H), Vernetzer (J) und Additive (K) .

Beispiele für Vernetzungskatalysatoren (E) sind die bisher schon bekannten Titanverbindungen, wie Tetraisopropoxytitanat, sowie Zirkonium- und Hafniumverbindungen, Zinkverbindungen wie Zink(2-ethylhexoat) und organische Zinnverbindungen, wie Di-n-butylzinndilaurat und Di-n-butylzinndiacetat, Di-n-butylzinnoxid, Dioctylzinndiacetat, Dioctylzinndilaurat, Dioctylzinnoxid sowie Umsetzungsprodukte dieser Verbindungen mit Alkoxysilanen wie Tetraethoxysilan, wobei Di-n-octylzinnoxid in Tetraethylsilikat-Hydrolysat, Di-n-octylzinnoxid in einem Gemisch aus 50 Gew.-% Methyltriethoxysilan-Hydrolysat und 50 Gew.-% 3-Aminopropyltriethoxysilan, Di-n-octylzinnoxid in Tetraisopropylsilikat und das Umsetzungsprodukt von Di-n-butylzinndiacetat und Tetraethoxysilan bevorzugt sind.

Falls die erfindungsgemäßen Massen Vernetzungskatalysatoren (E) enthalten, handelt es sich um Mengen von vorzugsweise 0,0001 bis 2 Gewichtsteilen, bevorzugt 0,001 bis 1 Gewichtsteilen, jeweils bezogen auf 100 Gewichtsteile der erfindungsgemäßen Masse. Die erfindungsgemäßen Massen enthalten bevorzugt Katalysator (E).

Beispiele für Füllstoffe (F) sind nicht verstärkende Füllstoffe, also Füllstoffe mit einer BET-Oberfläche von bis zu 50 m²/g, wie Quarz, Diatomeenerde, Calciumsilikat, Zirkoniumsilikat, Zeolithe, Metalloxidpulver, wie Aluminium-, Titan-, Eisen- oder Zinkoxide bzw. deren Mischoxide, Bariumsulfat, Calciumcarbonat, Gips, Siliciumnitrid, Siliciumcarbid, Bornitrid, Glas- und Kunststoffpulver, wie Polyacrylnitrilpulver; verstärkende Füllstoffe, also Füllstoffe mit einer BET-Oberfläche von mehr als 50 m²/g, wie pyrogen hergestellte Kieselsäure, gefällte Kieselsäure, gefälltes Calciumcarbonat, Ruß, wie Furnace- und Acetylenruß und Silicium-Aluminium-Mischoxide großer BET-Oberfläche; faserförmige Füllstoffe, wie Asbest sowie Kunststofffasern. Die genannten Füllstoffe können hydrophobiert sein, beispielsweise durch die Behandlung mit Organosilanen bzw. -siloxanen oder durch Veretherung von Hydroxylgruppen zu Alkoxygruppen. Falls Füllstoffe (F) eingesetzt werden, handelt es sich bevorzugt um hydrophile pyrogene Kieselsäure, gefälltes Calciumcarbonat und Marmormehl.

Falls die erfindungsgemäßen Massen Komponente (F) enthalten, handelt es sich um Mengen von vorzugsweise 1 bis 80 Gewichtsteilen, bevorzugt 5 bis 65 Gewichtsteilen, jeweils bezogen auf 100 Gewichtsteile erfindungsgemäße Masse. Die erfindungsgemäßen Massen enthalten bevorzugt Komponente (F).

Bei dem in den erfindungsgemäßen Massen gegebenenfalls eingesetzten Haftvermittler (G) kann es sich um Silane und Organopolysiloxane mit funktionellen Gruppen handeln, wie beispielsweise solche mit Glycidoxypropyl-, Ureidopropyl- oder Methacryloxypropylresten.

Beispiele für Haftvermittler (G) sind Epoxysilane, wie Glycidoxypropyltrimethoxysilane, Glycidoxypropyl-methyldimethoxysilan, Glycidoxypropyltriethoxysilan oder Glycidoxypropyl-metyhldiethoxysilan, Tris-[3-(trimethoxysilyl)propyl]-isocyanurat, 2-(3-Triethoxysilylproypl)-maleinsäureanhydrid, N-(3-Trimethoxysilylpropyl)-harnstoff, N-(3-Triethoxysilylpropyl)-harnstoff, N-(Trimethoxysilylmethyl)-harnstoff, N-(Methyldimethoxysilylmethyl)-harnstoff, N-(3-Triethoxysilylmethyl)-harnstoff, N-(3-Methyldiethoxysilylmethyl)harnstoff, O-Methylcarbamatomethyl-methyldimethoxysilan, O-Methylcarbamatomethyl-trimethoxysilan, O-Ethylcarbamatomethyl-methyldiethoxysilan, O-Ethylcarbamatomethyl-triethoxysilan, 3-Methacryloxypropyl-trimethoxysilan, Methacryloxymethyl-trimethoxysilan, Methacryloxymethyl-methyldimethoxysilan, Methacryloxymethyl-triethoxysilan, Methacryloxymethyl-methyldiethoxysilan, 3-Acryloxypropyl-trimethoxysilan, Acryloxymethyl-trimethoxysilan, Acryloxymethyl-methyldimethoxysilane, Acryloxymethyl-triethoxysilan, Acryloxymethyl-methyldiethoxysilan und deren Teilkondensate sowie ethoxyterminiertes 3-Aminopropyl(methyl) silsesquioxan (CAS-Nummer 128446-60-6).

Falls die erfindungsgemäßen Massen Komponente (G) enthalten, handelt es sich um Mengen von vorzugsweise 0,01 bis 10 Gewichtsteilen, bevorzugt 0,1 bis 2,5 Gewichtsteilen, jeweils bezogen auf 100 Gewichtsteile der erfindungsgemäßen Masse. Die erfindungsgemäßen Massen enthalten außer beim Einsatz von Calciumcarbonaten als Füllstoff bevorzugt keine Komponente (G). Falls die erfindungsgemäßen Massen Calciumcarbonat als Füllstoff (F) enthalten, ist der Einsatz von Komponente (G) bevorzugt.

Beispiele für Weichmacher (H) sind bei Raumtemperatur flüssige, durch Trimethylsiloxygruppen endblockierte Dimethylpolysiloxane, insbesondere mit Viskositäten bei 25°C im Bereich zwischen 5 und 10 000 mPas sowie hochsiedende Kohlenwasserstoffe, wie zum Beispiel Paraffinöle oder Mineralöle bestehend aus naphthenischen und paraffinischen Einheiten.

Falls die erfindungsgemäßen Massen Komponente (H) enthalten, handelt es sich um Mengen von vorzugsweise 1 bis 50 Gewichtsteilen, bevorzugt 10 bis 35 Gewichtsteilen, jeweils bezogen auf 100 Gewichtsteile der erfindungsgemäßen Masse. Die erfindungsgemäßen Massen enthalten bevorzugt Komponente (H).

Bei den in den erfindungsgemäßen Massen gegebenenfalls eingesetzten weiteren Vernetzern (J) kann es sich um beliebige, bisher bekannte Vernetzer mit mindestens drei kondensationsfähigen Resten handeln, wie beispielsweise Silane mit mindestens drei Organyloxygruppen, die von Komponente (B) verschieden sind.

Besonders bevorzugt handelt es sich bei den in den erfindungsgemäßen Massen gegebenenfalls eingesetzten weiteren Vernetzern (J) um Silanvernetzer, wie Tetramethoxysilan, Tetraethoxysilan, Tetrapropoxysilan, Tetrabutoxysilan, Methyltrimethoxysilan, Methyltriethoxysilan, Vinyltrimethoxysilan, Vinyltriethoxysilan, Phenyltrimethoxysilan, Phenyltriethoxysilan, 1,2-Bis(trimethoxysilyl)ethan, 1,2-Bis(triethoxysilyl)ethan, Methyltriacetoxysilan, Ethyltriacetoxysilan, Methyltris(methylethylketoximo)silan oder Vinyltris(methylethylketoximo)silan sowie deren Teilhydrolysate.

Die in den erfindungsgemäßen Massen gegebenenfalls eingesetzten weiteren Vernetzer (J) sind handelsübliche Produkte bzw. können nach in der Siliciumchemie bekannten Verfahren hergestellt werden.

Falls die erfindungsgemäßen Massen weitere Vernetzer (J) enthalten, handelt es sich um Mengen von vorzugsweise 0,1 bis 10 Gewichtsteilen, besonders bevorzugt 0,2 bis 5 Gewichtsteilen, ganz besonders bevorzugt 0,5 bis 3 Gewichtsteilen, jeweils bezogen auf 100 Gewichtsteile der erfindungsgemäßen Masse. Die erfindungsgemäßen Massen enthalten bevorzugt Vernetzer (J).

Falls die erfindungsgemäß eingesetzte Mischung (M) bereits Silane (C1) der Formel (II) mit b gleich 3 oder 4 enthalten, kann auf den Zusatz von Vernetzer (J) verzichtet oder die Einsatzmenge reduziert werden.

Beispiele für Additive (K) sind Pigmente, Farbstoffe, Riechstoffe, Oxidationsinhibitoren, Mittel zur Beeinflussung der elektrischen Eigenschaften, wie leitfähiger Ruß, flammabweisend machende Mittel, Lichtschutzmittel und Mittel zur Verlängerung der Hautbildungszeit, wie Silane mit einem SiC-gebundenen Mercaptoalkylrest, zellenerzeugende Mittel, z.B. Azodicarbonamid, Hitzestabilisatoren und Thixotropiermittel, wie beispielsweise Polyether, Biozide wie Fungizide, Bacterizide, Acarizide und Mittel zur Regulierung des Moduls wie Polydimethylsiloxane mit nur einer OH-Endgruppe sowie Mittel zur Verbesserung der Lagerstabilität, wie Alkylphosphonsäuren oder Phosphorsäureester.

Falls die erfindungsgemäßen Massen Komponente (K) enthalten, handelt es sich um Mengen von vorzugsweise 0,0001 bis 10 Gewichtsteilen, bevorzugt 0,001 bis 10 Gewichtsteilen, jeweils bezogen auf 100 Gewichtsteile der erfindungsgemäßen Masse. Die erfindungsgemäßen Massen enthalten bevorzugt Komponente (K). Bevorzugt handelt es sich bei den erfindungsgemäßen Massen um solche, herstellbar unter Verwendung von
(A) Organosiliciumverbindungen,
(M) Mischungen enthaltend Organosiliciumverbindungen (B) sowie Komponente (C) ausgewählt aus Verbindungen (C2) sowie gegebenenfalls Organosiliciumverbindungen (C1), gegebenenfalls Katalysator (D),
   gegebenenfalls (E) Vernetzungskatalysatoren,
   gegebenenfalls (F) Füllstoffen,
   gegebenenfalls (G) Haftvermittlern,
   gegebenenfalls (H) Weichmachern,
   gegebenenfalls (J) Vernetzern und
   gegebenenfalls (K) Additiven.

Besonders bevorzugt handelt es sich bei den erfindungsgemäßen Massen um solche, herstellbar unter Verwendung von
(A) im Wesentlichen linearen, OH-terminierten Organopolysiloxanen,
(M) Mischungen enthaltend Organosiliciumverbindungen (B) sowie Verbindungen (C2) sowie gegebenenfalls Katalysator (D),
(E) Vernetzungskatalysatoren,
   gegebenenfalls (F) Füllstoffen,
   gegebenenfalls (G) Haftvermittlern,
   gegebenenfalls (H) Weichmachern,
   gegebenenfalls (J) Vernetzern und
   gegebenenfalls (K) Additiven.

Besonders bevorzugt werden zur Herstellung der erfindungsgemäßen Massen keine über die Komponenten (A) bis (K) hinausgehende Bestandteile eingesetzt.

Bei den einzelnen Bestandteilen der erfindungsgemäßen Massen kann es sich jeweils um eine Art eines solchen Bestandteils wie auch um ein Gemisch aus mindestens zwei verschiedenen Arten derartiger Bestandteile handeln.

Ein weiterer Gegenstand der vorliegenden Erfindung ist ein Verfahren zur Herstellung der erfindungsgemäßen Massen, dadurch gekennzeichnet, dass
in einem 1. Schritt
   Organosiliciumverbindungen (A) gegebenenfalls im Gemisch mit Weichmacher (H) und Mischungen (M) miteinander vermischt und reagieren gelassen werden und
in einem 2. Schritt
   die im 1. Schritt erhaltene Zusammensetzung mit mindestens einer Komponente ausgewählt aus Vernetzungskatalysatoren (E), Füllstoffe (F), Haftvermittler (G), Weichmacher (H), Vernetzer (J) und Additive (K) vermischt wird.

Das Vermischen der Bestandteile im 2. Schritt des erfindungsgemäßen Verfahrens kann bei Temperaturen bevorzugt zwischen 5°C und 35°C und einem Druck bevorzugt zwischen 0,1 bar und 300 bar erfolgen. Falls erwünscht, kann dieses Vermischen aber auch bei höheren Temperaturen erfolgen, z.B. bei Temperaturen im Bereich von 35 bis 135°C. Falls gewünscht kann geheizt oder gekühlt werden.

Weichmacher (H) kann ganz oder teilweise bereits mit dem Polymer (A) im 1. Schritt gemischt werden. Das Einmischen der gegebenenfalls eingesetzten weiteren Komponenten (E) bis (K) im 2. Schritt des erfindungsgemäßen Verfahrens kann in beliebiger Reihenfolge erfolgen.

Aus Gründen der bequemen Verarbeitung werden bevorzugt zunächst weitere Weichmacher (H), falls nicht schon komplett im 1. Schritt mit dem Polymer (A) gemischt, Haftvermittler (G) und weitere Silane (J) zugegeben, danach Füllstoffe (F) und schließlich Vernetzungskatalysator (E) und weitere Additive (K) zugegeben.

Das erfindungsgemäße Vermischen der einzelnen Komponenten findet bevorzugt unter weitestgehendem Ausschluss von Wasser aus der umgebenden Atmosphäre statt, was z.B. durch Überschleierung mit trockener Luft oder trockenem Stickstoff realisiert werden kann.

Des Weiteren ist es in der Regel unerheblich, an welcher Stelle Vernetzungskatalysator (E) zugegeben wird. Sinnvollerweise gibt man den Katalysator jedoch erst zum Schluss zu, da dann die Mischung aktiviert wird. Ein zu langes Mischen bereits sehr reaktiver Dichtmassen wird der Fachmann in der Praxis vermeiden wollen, da ein vollständiger Ausschluss von Feuchtigkeit beim Herstellen der Mischung schwierig oder zumindest unökonomisch ist.

Nach Vermischen aller gewünschten Bestandteile wird die erfindungsgemäße Masse bevorzugt entgast und in feuchtigkeitsdichte Gebinde gefüllt.

Die erfindungsgemäße Herstellung der erfindungsgemäßen vernetzbaren Massen kann sowohl diskontinuierlich wie auch kontinuierlich durchgeführt werden, wobei die kontinuierliche Verfahrensweise bevorzugt ist.

Bei der kontinuierlichen Verfahrensweise wird bevorzugt zunächst Organosiliciumverbindung (A) mit Mischung (M) vermischt und die weiteren Komponenten (E) bis (K) zugegeben, nachdem bevorzugt mindestens 50 %, besonders bevorzugt mindestens 80 %, der OH-Gruppen der Komponente (A) abreagiert sind. Bevorzugt werden zunächst Weichmacher (H), Haftvermittler (G) und weitere Silane (J) zugegeben, danach Füllstoffe (F) eingemischt und schließlich Vernetzungskatalysator (E) und weitere Additive (K) zugegeben.

Bei den erfindungsgemäßen Massen handelt es sich vorzugsweise um unter Ausschluss von Wasser lagerfähige, bei Zutritt von Wasser aushärtende Einkomponentenmassen, die in der Fachwelt in der Regel als RTV-1-Massen bezeichnet werden.

Für die Vernetzung der erfindungsgemäßen Massen reicht der übliche Wassergehalt der Luft aus. Die Vernetzung der erfindungsgemäßen Massen erfolgt vorzugsweise bei Raumtemperatur. Sie kann, falls erwünscht, auch bei höheren oder niedrigeren Temperaturen als Raumtemperatur, z.B. bei -5° bis 15°C oder bei 30° bis 50°C und/oder mittels des normalen Wassergehalts der Luft übersteigenden Konzentrationen von Wasser durchgeführt werden.

Vorzugsweise wird die Vernetzung bei einem Druck von 100 bis 1100 hPa, insbesondere beim Druck der umgebenden Atmosphäre, durchgeführt.

Ein weiterer Gegenstand der vorliegenden Erfindung sind Formkörper, hergestellt durch Vernetzung der erfindungsgemäßen Massen.

Die erfindungsgemäßen Massen können für alle Verwendungszwecke eingesetzt werden, für die unter Ausschluss von Wasser lagerfähige, bei Zutritt von Wasser bei Raumtemperatur zu Elastomeren vernetzende Massen eingesetzt werden können.

Die erfindungsgemäßen Massen eignen sich somit ausgezeichnet beispielsweise als Abdichtmassen für Fugen, einschließlich senkrecht verlaufender Fugen, und ähnlichen Leerräumen von z.B. 10 bis 40 mm lichter Weite, z.B. von Gebäuden, Land-, Wasser- und Luftfahrzeugen, oder als Klebstoffe oder Verkittungsmassen, z.B. im Fensterbau oder bei der Herstellung von Aquarien oder Vitrinen, sowie z.B. zur Herstellung von Schutzüberzügen, einschließlich solcher für der ständigen Einwirkung von Süß- oder Meerwasser ausgesetzte Oberflächen, oder das Gleiten verhindernden Überzügen, oder von gummielastischen Formkörpern sowie für die Isolierung von elektrischen oder elektronischen Vorrichtungen.

Die erfindungsgemäßen Massen haben den Vorteil, dass sie leicht herzustellen sind und über einen langen Zeitraum eine hohe Lagerstabilität aufweisen.

Die erfindungsgemäßen Massen haben den Vorteil, dass keine oder nur geringe Anteile an toxikologisch bedenklichen Spaltprodukten entstehen.

Die erfindungsgemäßen Mischungen (M) haben den Vorteil, dass sie schnell weiterverarbeitet werden können.

Die erfindungsgemäßen Mischungen (M) haben den Vorteil, dass Organosiliciumverbindung (B) keine Vergilbung erzeugt, insbesondere wenn sie im Gemisch mit Komponenten (C1) vorliegt.

Des Weiteren haben die erfindungsgemäßen Massen den Vorteil, dass sie sich vollständig kontinuierlich herstellen lassen.

In den nachstehend beschriebenen Beispielen beziehen sich alle Viskositätsangaben auf eine Temperatur von 25°C. Sofern nicht anders angegeben, werden die nachstehenden Beispiele bei einem Druck der umgebenden Atmosphäre, also etwa bei 1000 hPa, und bei Raumtemperatur, also bei etwa 23°C, bzw. bei einer Temperatur, die sich beim Zusammengeben der Reaktanden bei Raumtemperatur ohne zusätzliche Heizung oder Kühlung einstellt, sowie bei einer relativen Luftfeuchtigkeit von etwa 50 % durchgeführt. Wegen der zügigen Arbeitsweise im Labor wurde auf eine Beschleierung mit trockener Luft verzichtet. Des Weiteren beziehen sich alle Angaben von Teilen und Prozentsätzen, soweit nichts anderes angegeben ist, auf das Gewicht.

Im Folgenden wurden die Viskositäten nach DIN 53019 wie oben beschrieben ermittelt.

Es werden die folgenden Komponenten eingesetzt:
SB1: 4-(Triethoxysilylmethyl)tetrahydro-1,4-oxazin
SB2: N-Cyclohexylaminomethyltriethoxysilan
SB3: 4-(Triisopropoxysilylmethyl)tetrahydro-1,4-oxazin
TES: Tetraethoxysilan (käuflich erhältlich unter "TES 28" bei der Wacker Chemie AG, D-München)
**VTMO:** Vinlytrimethoxysilan
**GF93:** 3-Aminopropyltriethoxysilan
**GF9:** N-(2-Aminoethyl)-3-aminopropyltriethoxysilan

### Beispiele 1

Eine Mischung aus 490 g eines α,ω-Dihydroxypolydimethylsiloxans mit einer Viskosität von 80 000 mPa·s (käuflich erhältlich unter der Bezeichnung "Polymer FD 80" bei der Wacker Chemie AG, D-München) und 94 g eines α,ω-Bis(trimethylsiloxy)polydimethylsiloxans mit einer Viskosität von 1000 mPa·s (käuflich erhältlich unter der Bezeichnung "Weichmacher 1000" bei der Wacker Chemie AG, D-München) werden mit einer Mischung aus 16,5 g 4-(Triethoxysilylmethyl)tetrahydro-1,4-oxazin (SB1) und 0,3 g Methanol vermischt. Die Viskosität der so erhaltenen Polymermischung wurde nach 24 Stunden Lagerung bei Raumtemperatur gemessen und betrug 67 800 mPas.

### Beispiele 2 bis 16

Die in Beispiel 1 beschriebene Arbeitsweise wurde wiederholt, mit der Abänderung, dass die in Tabelle 1 beschriebenen Mischungen eingesetzt wurden. Die dabei erhaltenen Viskositäten sind ebenfalls in Tabelle 1 angegeben.

### Vergleichsbeispiel 1

Die in Beispiel 1 beschriebene Arbeitsweise wurde wiederholt, mit der Abänderung, dass kein Methanol eingesetzt wird.

**Tabelle 1:**

| **Beispiel** | **Mischung** | | | **Viskosität** |
|---|---|---|---|---|
| **V1** | 16,8 g SB1 | - | - | 107000 mPas |
| **1** | 16,5 g SB1 | - | 0,30 g Methanol | 67800 mPas |
| **2** | 16,5 g SB1 | - | 0,15 g Ethanol | 78100 mPas |
| **3** | 16,5 g SB1 | - | 0,30 g Ethanol | 78000 mPas |
| **4** | 16,5 g SB1 | - | 0,60 g Ethanol | 75000 mPas |
| **5** | 16,5 g SB1 | 0,15 g TES | - | 78500 mPas |
| **6** | 16,5 g SB1 | 0,30 g TES | - | 82600 mPas |
| **7** | 16,5 g SB1 | 0,60 g TES | - | 82300 mPas |
| **8** | 16,5 g SB1 | 0,15 g VTMO | - | 81200 mPas |
| **9** | 16,5 g SB1 | 0,30 g VTMO | - | 82600 mPas |
| **10** | 16,5 g SB1 | 0,60 g VTMO | - | 82300 mPas |
| **11** | 16,5 g SB1 | 0,15 g GF9 | - | 88800 mPas |
| **12** | 16,5 g SB1 | 0,30 g GF9 | - | 89400 mPas |
| **13** | 16,5 g SB1 | 0,60 g GF9 | - | 91100 mPas |
| **14** | 16,5 g SB1 | 0,15 g GF93 | - | 87300 mPas |
| **15** | 16,5 g SB1 | 0,30 g GF93 | - | 88700 mPas |
| **16** | 16,5 g SB1 | 0,60 g GF93 | - | 91000 mPas |

### Beispiele B18, B20 und B21

Die in Beispiel 1 beschriebene Arbeitsweise wurde wiederholt, mit der Abänderung, dass die in Tabelle 2 beschriebenen Mischungen eingesetzt wurden. Die dabei erhaltenen Viskositäten sind ebenfalls in Tabelle 2 angegeben.

### Vergleichsbeispiel 2

Die in Beispiel 18 beschriebene Arbeitsweise wurde wiederholt, mit der Abänderung, dass kein VTMO eingesetzt wird.

### Vergleichsbeispiel 3

Die in Beispiel 20 beschriebene Arbeitsweise wurde wiederholt, mit der Abänderung, dass kein Methanol eingesetzt wird.

**Tabelle 2:**

| **Beispiel** | **Mischung** | | | **Viskosität** |
|---|---|---|---|---|
| **V2** | 16,8 g SB2 | - | - | geliert |
| **18** | 16,5 g SB2 | 0,30 g VTMO | - | 81400 mPas |
| **V3** | 16,8 g SB3 | - | - | 98300 mPas |
| **20** | 16,5 g SB3 | - | 0,30 g Methanol | 78800 mPas |
| **21** | 16,5 g SB3 | - | 0,30 g Ethanol | 78000 mPas |

### Beispiel 22

Eine Mischung aus 490 g eines α,ω-Dihydroxypolydimethylsiloxans mit einer Viskosität von 80.000 mPa·s(käuflich erhältlich unter der Bezeichnung "Polymer FD 80" bei der Wacker Chemie AG, D-München) und 94g eines α,ω-Bis(trimethylsiloxy)polydimethylsiloxans mit einer Viskosität von 1000 mPa·s (käuflich erhältlich unter der Bezeichnung "Weichmacher 1000" bei der Wacker Chemie AG, D-München) wurde mit einer Mischung aus 16,5 g 4-(Triethoxysilylmethyl)tetrahydro-1,4-oxazin und 0,3 g Methanol in einem Planetenmischer vermischt. Nachdem diese Mischung 30 min gerührt wurde, wurden 1 g eines Produkts J1, welches aus 16,0 Mol-% Einheiten der Formel MeSi(OEt)₂O_{1/2}, 46,4 Mol-% Einheiten der Formel MeSi(OEt)O_{2/2}, 36,5 Mol-% Einheiten der Formel MeSiO_{3/2}, 0,2 Mol-% Einheiten der Formel Me₂Si(OEt)O_{1/2} und 0,9 Mol-% Einheiten der Formel Me₂SiO_{2/2} bestand, 8 g 3-Aminopropyltriethoxysilan (käuflich erhältlich unter der Bezeichnung GENIOSIL^{®} GF 93 bei der Wacker Chemie AG, D-München), 2 g Vinyltriethoxysilan (käuflich erhältlich unter der Bezeichnung GENIOSIL^{®} GF 56 bei der Wacker Chemie AG, D-München) und 5 g Tetraethylsilikat (käuflich erhältlich unter der Bezeichnung "Silikat TES 28" bei der Wacker Chemie AG, D-München) zugegeben und für eine Dauer von 5 Minuten vermischt. Anschließend wurden 45 g einer pyrogenen Kieselsäure mit einer spezifischen Oberfläche nach BET von 150 m²/g (käuflich erhältlich unter der Bezeichnung HDK^{®} V15 bei der Wacker Chemie AG, D-München) eingemischt und bei einem Druck von 50 hPa vollständig homogenisiert. Zuletzt wurden 1 g einer 1:1-Lösung von Octylphosphonsäure in Methyltrimethoxysilan und 2 g eines Reaktionsproduktes aus Dibutylzinndiacetat und Tetraethoxysilan (käuflich erhältlich unter der Bezeichnung "Katalysator 41" bei der Wacker Chemie AG, D-München) zugegeben und nochmals 5 min bei einem Druck von ca. 50 hPa (absolut) homogenisiert.

Die so erhaltene RTV1-Masse wurde in feuchtigkeitsdichte handelsübliche Polyethylen-Kartuschen abgefüllt.

Das Produkt J1 wurde durch Hydrolyse und Kondensation von Methyltriethoxysilan hergestellt. Es wies bei 25°C eine Dichte von 1,09 g/cm³ und eine Viskosität von 28,4 mPa·s auf.

Von der in Beispiel 22 hergestellten Dichtmasse wurden jeweils 2 mm dicke Platten auf eine Polyethylenfolie ausgestrichen, die nach einem Tag Aushärtung von der Folie abgelöst und so aufgehängt wurden, dass für weitere 6 Tage von allen Seiten Luft zutreten konnte, so dass die Proben über insgesamt 7 Tage ausgehärtet wurden. Die relative Luftfeuchtigkeit wurde dabei auf 50% eingestellt, wobei die Temperatur auf 23°C geregelt wurde. Von diesen Platten wurden anschließend Prüfkörper der Form S2 gemäß DIN 53504-85 ausgestanzt und das jeweilige Modul ermittelt.

Zur Bestimmung der Härte wurden 6 mm dicke Probekörper hergestellt, die über 7 Tage bei einer relativen Luftfeuchtigkeit von 50 % und einer Temperatur von 23°C durch Reaktion mit der umgebenden Luftfeuchtigkeit auf PE-Folien ausgehärtet wurden.

Die Härte der klebfrei ausgehärteten Dichtmasse betrug 22 Shore A. Das Modul (Zuspannungswert bei 100 % Dehnung) wurde mit 0,38 Mpa ermittelt. Die Dichtmasse ist somit also beispielsweise hervorragend für die Abdichtung von Bauwerksfugen geeignet.

## Patentansprüche

1. Durch Kondensationsreaktion vernetzbare Massen, herstellbar unter Verwendung von
**(A) Organosiliciumverbindungen** mit mindestens zwei Silanolgruppen mit einer Viskosität, bestimmt nach der in der Beschreibung angegebenen Methode, von 10³ bis 10⁶ mPas bei 25°C, und
**(M) Mischungen** enthaltend
(B) Organosiliciumverbindungen der Formel
R⁶R⁷N-CR¹₂SiRₐ(OR²)₃₋ₐ (I),
wobei
R gleiche oder verschiedene, einwertige Kohlenwasserstoffreste bedeutet,
R¹ gleiche oder verschiedene, einwertige Kohlenwasserstoffreste oder Wasserstoffatom bedeutet,
R² gleich oder verschieden sein kann und einwertige, gegebenenfalls substituierte Kohlenwasserstoffreste bedeutet,
R⁶ gleich oder verschieden sein kann und einwertige, gegebenenfalls substituierte Kohlenwasserstoffreste oder Wasserstoffatom bedeutet,
R⁷ gleich oder verschieden sein kann und einwertige, gegebenenfalls substituierte Kohlenwasserstoffreste bedeutet, wobei R⁶ und R⁷ auch einen Ring bilden können, der gegebenenfalls durch Heteroatome unterbrochen sein kann, und
a gleich 0 oder 1 ist,
und/oder deren Teilhydrolysate,
Komponente (C), ausgewählt aus
(C2) Verbindungen der Formel
R⁵OH (III),
wobei
R⁵ gleich oder verschieden sein kann und einwertige, gegebenenfalls substituierte Kohlenwasserstoffreste bedeutet,
sowie
gegebenenfalls (D) Katalysator.

2. Massen gemäß Anspruch 1, **dadurch gekennzeichnet, dass** die Reste R², R⁴ und R⁵ in der eingesetzten Mischung (M) die gleiche Bedeutung haben.

3. Massen gemäß Anspruch 1 oder 2, **dadurch gekennzeichnet, dass** die Mischungen (M) Komponente (C) in Mengen von 0,01 bis 20 Gewichtsteilen, bezogen auf 100 Gewichtsteile Komponente (B), enthalten.

4. Massen gemäß einem oder mehreren der Ansprüche 1 bis 3, **dadurch gekennzeichnet, dass** es sich bei Verbindungen (B) um N-cyclo-Hexylaminomethyltriethoxysilan, N-Phenylaminomethyltriethoxysilan, N,N-Di-n- butylaminomethyltriethoxysilan, 4-(Triethoxysilylmethyl)tetrahydro-1,4-oxazin oder 4-(Trimethoxysilylmethyl)tetrahydro-1,4-oxazin handelt.

5. Massen gemäß einem oder mehreren der Ansprüche 1 bis 4, **dadurch gekennzeichnet, dass** es sich um solche handelt, herstellbar unter Verwendung von
(A) Organosiliciumverbindungen,
(M) Mischungen enthaltend Organosiliciumverbindungen (B) sowie Komponente (C) ausgewählt aus Verbindungen (C2) sowie gegebenenfalls Katalysator (D),
gegebenenfalls (E) Vernetzungskatalysatoren,
gegebenenfalls (F) Füllstoffen,
gegebenenfalls (G) Haftvermittlern,
gegebenenfalls (H) Weichmachern,
gegebenenfalls (J) Vernetzern und
gegebenenfalls (K) Additiven.

6. Verfahren zur Herstellung von Organyloxygruppen aufweisenden Organosiliciumverbindungen, **dadurch gekennzeichnet, dass**
(A) Organosiliciumverbindungen mit mindestens zwei Silanolgruppen mit einer Viskosität, bestimmt nach der in der Beschreibung angegebenen Methode, von 10³ bis 10⁶ mPas bei 25°C und
(M) Mischungen enthaltend (B) Organosiliciumverbindungen der Formel (I) und/oder deren Teilhydrolysate, Komponente (C), ausgewählt aus (C2) Verbindungen der Formel (III), sowie gegebenenfalls (D) Katalysator
miteinander vermischt und reagieren gelassen werden.

7. Verfahren zur Herstellung der Massen gemäß einem oder mehreren der Ansprüche 1 bis 5, **dadurch gekennzeichnet, dass**
in einem 1. Schritt
Organosiliciumverbindungen (A) gegebenenfalls im Gemisch mit Weichmacher (H) und Mischungen (M) miteinander vermischt und reagieren gelassen werden und
in einem 2. Schritt
die im 1. Schritt erhaltene Zusammensetzung mit mindestens einer Komponente ausgewählt aus Vernetzungskatalysatoren (E), Füllstoffe (F), Haftvermittler (G), Weichmacher (H), Vernetzer (J) und Additive (K) vermischt wird.

8. Formkörper, hergestellt durch Vernetzung der Zusammensetzungen gemäß einem oder mehreren der Ansprüche 1 bis 5, oder hergestellt nach Anspruch 6 oder 7.

## Claims

1. Compositions crosslinkable by condensation reaction, producible using
**(A) organosilicon compounds** having at least two silanol groups and having a viscosity, determined in accordance with the method specified in the description, of 10³ to 10⁶ mPas at 25°C,
and
**(M) mixtures** containing
(B) organosilicon compounds of the formula
R⁶R⁷N-CR¹₂SiRₐ(OR²)₃₋ₐ (I),
in which
R denotes identical or different monovalent hydrocarbon radicals,
R¹ denotes identical or different monovalent hydrocarbon radicals or a hydrogen atom,
R² may be identical or different and denotes monovalent, optionally substituted hydrocarbon radicals,
R⁶ may be identical or different and denotes monovalent, optionally substituted hydrocarbon radicals or a hydrogen atom,
R⁷ may be identical or different and denotes monovalent, optionally substituted hydrocarbon radicals, where R⁶ and
R⁷ can also form a ring which may optionally be interrupted by heteroatoms, and
a is equal to 0 or 1,
and/or the partial hydrolysates thereof,
component (C), selected from
(C2) compounds of the formula
R⁵OH (III),
in which
R⁵ may be identical or different and denotes monovalent, optionally substituted hydrocarbon radicals,
and
optionally (D) catalyst.

2. Compositions according to Claim 1, **characterized in that** the radicals R², R⁴ and R⁵ in the mixture (M) used have the same definition.

3. Compositions according to Claim 1 or 2, **characterized in that** the mixtures (M) contain component (C) in amounts of 0.01 to 20 parts by weight, based on 100 parts by weight of component (B).

4. Compositions according to one or more of Claims 1 to 3, **characterized in that** compounds (B) are N-cyclohexylaminomethyltriethoxysilane, N-phenylaminomethyltriethoxysilane, N,N-di-n-butylaminomethyltriethoxysilane, 4-(triethoxysilylmethyl)tetrahydro-1,4-oxazine or 4-(trimethoxysilylmethyl)tetrahydro-1,4-oxazine.

5. Compositions according to one or more of Claims 1 to 4, **characterized in that** said compositions are those producible using
(A) organosilicon compounds,
(M) mixtures containing organosilicon compounds (B) and component (C) selected from compounds (C2), and optionally catalyst (D),
optionally (E) crosslinking catalysts,
optionally (F) fillers,
optionally (G) adhesion promoters,
optionally (H) plasticizers,
optionally (J) crosslinkers and
optionally (K) additives.

6. Process for producing organyloxy group-comprising organosilicon compounds, **characterized in that**
(A) organosilicon compounds having at least two silanol groups and having a viscosity, determined in accordance with the method specified in the description, of 10³ to 10⁶ mPas at 25°C and
(M) mixtures containing (B) organosilicon compounds of the formula (I) and/or the partial hydrolysates thereof, component (C), selected from (C2) compounds of the formula (III), and optionally (D) catalyst
are mixed with one another and allowed to react.

7. Process for producing the compositions according to one or more of Claims 1 to 5, **characterized in that** in a first step
organosilicon compounds (A) optionally in a mixture with plasticizer (H) and mixtures (M) are mixed with one another and allowed to react and
in a second step
the composition obtained in the first step is mixed with at least one component selected from crosslinking catalysts (E), fillers (F), adhesion promoters (G), plasticizers (H), crosslinkers (J) and additives (K).

8. Moulding produced by crosslinking the compositions according to one or more of Claims 1 to 5 or produced according to Claim 6 or 7.

## Revendications

1. Masses réticulables par une réaction de condensation, pouvant être fabriquées par utilisation
**(A) de composés organosiliciés** ayant au moins deux groupes silanol, ayant une viscosité, déterminée par la méthode donnée dans la description, de 10³ à 10⁶ mPa.s à 25 °C,
et
**(M) de mélanges** contenant
(B) des composés organosiliciés de Formule
R⁶R⁷N-CR¹₂SiRₐ(OR²)₃₋ₐ (I),
dans laquelle
R représente des radicaux hydrocarbonés monovalents identiques ou différents,
R¹ représente des radicaux hydrocarbonés monovalents identiques ou différents, ou un atome d'hydrogène,
R² peut être identique ou différent et représente des radicaux hydrocarbonés monovalents, éventuellement substitués,
R⁶ peut être identique ou différent et représente des radicaux hydrocarbonés monovalents, éventuellement substitués, ou un atome d'hydrogène,
R⁷ peut être identique ou différent et représente des radicaux hydrocarbonés monovalents, éventuellement substitués, R⁶ et R⁷ pouvant aussi former un cycle, qui peut éventuellement être interrompu par des hétéroatomes, et
a représente 0 ou 1,
et/ou leurs hydrolysats partiels,
d'un composant (C), choisi parmi
(C2) les composés de Formule
R⁵OH (III),
dans laquelle
R⁵ peut être identique ou différent et représente des radicaux hydrocarbonés monovalents, éventuellement substitués,
ainsi qu'éventuellement (D) un catalyseur.

2. Masses selon la revendication 1, **caractérisées en ce que** les radicaux R², R⁴ et R⁵ du mélange (M) utilisé ont les mêmes significations.

3. Masses selon la revendication 1 ou 2, **caractérisées en ce que** les mélanges (M) contiennent le composant (C) en des quantités de 0,01 à 20 parties en poids pour 100 parties en poids du composant (B).

4. Masses selon l'une ou plusieurs des revendications 1 à 3, **caractérisées en ce que** les composés (B) sont le N-cyclo-hexylaminométhyltriéthoxysilane, le N-phénylaminométhyltriéthoxysilane, le N,N-di-n-butylaminométhyltriéthoxysilane, la 4-(triéthoxysilylméthyl)tétrahydro-1,4-oxazine ou la 4-(triméthoxysilylméthyl)tétrahydro-1,4-oxazine.

5. Masses selon l'une ou plusieurs des revendications 1 à 4, **caractérisées en ce qu'**il s'agit de masses pouvant être fabriquées par utilisation
(A) de composés organosiliciés,
(M) de mélanges contenant des composés organosiliciés (B), ainsi que
d'un composant (C) choisi parmi les composés (C2), ainsi qu'éventuellement un catalyseur (D),
éventuellement (E) des catalyseurs de réticulation,
éventuellement (F) des matières de charge,
éventuellement (G) des promoteurs d'adhérence,
éventuellement (H) des plastifiants,
éventuellement (J) des agents de réticulation et
éventuellement (K) des additifs.

6. Procédé de fabrication de composés organosiliciés comprenant des groupes organyloxy, **caractérisé en ce qu'**on mélange les uns aux autres et on fait réagir (A) des composés organosiliciés ayant au moins deux groupes silanol ayant une viscosité, déterminée par la méthode indiquée dans la description, de 10³ à 10⁶ mPa.s à 25 °C, et
(M) des mélanges contenant (B) des composés organosiliciés de Formule (I) et/ou leurs hydrolysats partiels, un composant (C) choisi parmi (C2) les composés de Formule (III), ainsi qu'éventuellement (D) un catalyseur.

7. Procédé de fabrication des masses selon l'une ou plusieurs des revendications 1 à 5, **caractérisé en ce que**,
dans une première étape, on mélange les uns aux autres et on fait réagir des composés organosiliciés (A) éventuellement on mélange avec le plastifiant (H) et les mélanges (M), et
dans une deuxième étape
on mélange la composition obtenue dans la première étape à au moins un composant choisi parmi les catalyseurs de réticulation (E), les matières de charge (F), les promoteurs d'adhérence (G), les plastifiants (H), les agents de réticulation (J) et les additifs (K).

8. Objet moulé, fabriqué par utilisation des compositions selon l'une ou plusieurs des revendications 1 à 5 ou fabriquées selon la revendication 6 ou 7.
